# FASCICULE DE BREVET EUROPEEN

(11) **EP 1 696 821 B1**
(45) Date de publication et mention de la délivrance du brevet: **13.02.2008**
(21) Numéro de dépôt: 04804934.0
(22) Date de dépôt: 20.12.2004
(51) Int. Cl.: A61D 17/00, A01K 29/00

(54) **PROCEDE ET DISPOSITIF DE DETECTION AUTOMATISEE DES CHEVAUCHEMENTS ENTRE ANIMAUX**
VORRICHTUNG UND VERFAHREN ZUM ERKENNEN DER BRUNST BEI TIEREN
METHOD AND DEVICE FOR AUTOMATICALLY DETECTING MATING OF ANIMALS

(30) Priorité: 19.12.2003 FR 0314970
(43) Date de publication de la demande: 06.09.2006
(73) Titulaire: Centre international d'études supérieures en sciences agronomiques (Montpellier Sup Agro), 34060 Montpellier Cedex 1 (FR); INSTITUT NATIONAL DE LA RECHERCHE AGRONOMIQUE (INRA), 75007 Paris (FR)
(72) Inventeur: BOCQUIER, François, F-34980 Saint Gely du Fesc (FR)
(74) Mandataire: Ravina, Bernard
(86) Numéro de dépôt international: PCT/EP2004/053598
(87) Numéro de publication internationale: WO 2005/065574

(56) Documents cités:
- WO-A-03/045273
- WO-A-20/04066720
- US-A- 4 503 808
- US-A- 4 846 106
- US-A1- 2003 137 431
- US-B1- 6 339 999

## Description

La présente invention concerne un procédé et un dispositif de détection automatisée de chevauchement entre animaux. Elle s'applique, en particulier, à la détection de période de fécondité d'animaux d'élevage.

La réussite de la reproduction des animaux de ferme est fondamentale dans la productivité des élevages car elle détermine directement la naissance de jeunes destinés à la production de viande et, indirectement, au démarrage d'une lactation qui est prolongée par la traite chez les animaux laitiers.

Chez ces animaux, les femelles n'acceptent le chevauchement que lorsqu'elles sont en chaleur (oestrus), c'est-à-dire pendant une période très courte (entre 36 et 48 heures) de leur cycle reproductif qui va de 17 jours (ovins) à 21 jours (bovins et caprins). L'expression de cet oestrus est plus ou moins nette selon les espèces : indétectable en l'absence de mâle chez les ovins et caprins et repérable chez les bovins par le fait que la vache en chaleur se laisse chevaucher par les autres et montre des signes d'excitation. La reproduction est également une étape clef de l'amélioration génétique des animaux puisque l'on peut inséminer artificiellement les femelles avec du sperme d'animaux jugés améliorateurs. Toutefois, ces inséminations doivent être pratiquées à un moment précis par rapport à l'apparition des chaleurs chez ces femelles.

Pour la détection des chaleurs, dans la plupart des cas, les éleveurs de bovins s'en remettent à l'observation des vaches avec toutefois des taux de détection faibles puisque les vaches expriment leurs chaleurs davantage pendant la phase nocturne que diurne. Quant aux petits ruminants, actuellement la seule solution pour réaliser des inséminations repose sur l'induction des chaleurs par des traitements hormonaux et une insémination programmée. L'usage des traitements hormonaux est réduit chez les bovins. Or, de plus en plus, au titre du principe de précaution demandé par les consommateurs, il faut envisager sérieusement que l'usage des traitements hormonaux, pour induire la cyclicité chez les animaux d'élevage, puisse être très réglementé. Si cette éventualité devenait réalité, il serait pratiquement impossible de réaliser, à grande échelle, des inséminations chez les petits ruminants. En effet, compte tenu de la taille des troupeaux (fréquemment de 300 à 600 individus), il n'est pas envisageable de faire de la détection d'oestrus en observant, plusieurs fois par jour, le comportement de mâles dans le troupeau. Le même problème se fait jour pour les bovins pour lesquels les effectifs par troupeau s'accroissent notablement. Il y a donc un besoin d'automatiser la détection des femelles en chaleur dans des troupeaux de grande taille, soit pour réaliser des saillies en monte naturelle avec contrôle de paternité, soit pour l'insémination artificielle.

Il existe actuellement des dispositifs de détection de femelles en chaleur qui reposent sur la mesure de l'agitation des vaches (podomètres distribués par AlfaLaval) et sur l'analyse des variations de production laitières et/ou de caractéristiques du lait (pH..). D'autres systèmes, beaucoup plus lourds, consistent à faire de la vidéo surveillance d'une zone où sont placés les animaux susceptibles de venir en chaleur.

Ces systèmes sont coûteux et d'une mise en oeuvre complexe. En effet, ils supposent une surveillance visuelle régulière par un observateur ou une analyse biochimique, et présentent des risques de défaut d'identification des femelles en chaleur.

Il existe aussi d'autres dispositifs électroniques de détection de femelles en chaleur qui sont utilisés uniquement chez les bovins. Ce sont des détecteurs de pression qui sont temporairement collés sur la croupe de la vache. Le chevauchement par une autre vache (qui n'est pas équipée et qui peut être n'importe laquelle) provoque un signal qui est enregistré dans le dispositif. Dans le cas du système DEC (Détecteur Electronique de Chaleur à alarme visuelle, vendu par la société IMV France), la fréquence de clignotement de la LED portée par la vache indique l'intensité et la fréquence des chevauchements et permet à l'éleveur de décider de l'insémination. Il existe un autre système (connu sous le nom de "HeatWatch", marque déposée, USA) qui repose sur le même principe, mais chaque fois que la vache est chevauchée, son dispositif envoie une information à une borne radio qui relaie le signal jusqu'à un ordinateur. La vache est identifiable par son numéro qui est introduit manuellement lors de l'installation du dispositif. Un autre système, plus récent, utilise 78 canaux radio pour identifier les vaches qui sont chevauchées (il ne s'agit pas du numéro officiel de l'animal mais d'un numéro temporaire, à la différence du système HeatWatch).

Ces systèmes sont tous coûteux et de mise en oeuvre complexe : toutes les femelles doivent être successivement et provisoirement équipées-pour que leur chaleur soit détectée.

D'une manière générale, tous les détecteurs existants utilisent les comportements femelle-femelle, qui sont beaucoup moins sélectifs que le comportement mâle-femelle. En effet, les vaches en chaleur acceptent le chevauchement, mais elles tentent également de chevaucher les autres vaches (non en chaleur). Cette faible sélectivité des relations vaches - vaches conduit à un nombre élevé de faux - positifs.

La présente invention vise à remédier à ces inconvénients.

A cet effet, la présente invention vise, selon un premier aspect, un dispositif de détection automatisée des chevauchements entre animaux, destiné à être porté par un animal, caractérisé en ce qu'il comporte :
- un moyen de fixation sur ledit animal,
- un moyen de détection d'une tentative de chevauchement, par ledit animal, d'un animal femelle,
- un moyen d'identification d'une étiquette électronique placée dans l'organisme de l'animal femelle, déclenché par ledit moyen de détection et/ou un moyen d'identification de l'animal femelle par traitement d'une image d'au moins une partie de l'animal femelle déclenché par ledit moyen de détection.

Grâce à ces dispositions, un très faible nombre d'animaux sont porteurs dudit dispositif : des animaux détecteurs mâles (castrés ou entiers et empêchés de saillir) ou des femelles androgénisées. La mise en oeuvre de la présente invention est donc très économique. De plus, les animaux munis du dispositif objet de la présente invention peuvent porter ce dispositif en permanence, ce qui réduit le nombre de manipulations nécessaires.

Selon des caractéristiques particulières, le dispositif tel que succinctement exposé ci-dessus comporte un moyen d'identification d'une étiquette électronique placée dans l'organisme de l'animal femelle, déclenché par ledit moyen de détection.

Selon des caractéristiques particulières, ladite étiquette électronique est placée dans le système digestif de l'animal femelle.

Grâce à chacune de ces dispositions, l'identification est effectuée à distance et peut mettre en oeuvre les transpondeurs déjà installés dans les organismes des animaux femelles. Les femelles chevauchées étant toutes porteuses d'une étiquette électronique individuelle permanente qui est légalement obligatoire, ces dispositions permettent de réduire encore le coût de la détection. Il suffit que le dispositif soit positionné dans une zone anatomique propice à la détection.

Les développements de la technologie RFID, en particulier les développements d'étiquettes électroniques passives (sans source d'énergie interne) peuvent être exploités pour la mise en oeuvre de la présente invention et les étiquettes déjà utilisées pour identifier les animaux peuvent être mise en oeuvre, le déploiement nécessaire à la mise en oeuvre de la présente invention étant alors limité au déploiement des dispositifs objets de la présente invention.

Selon des caractéristiques particulières, le dispositif tel que succinctement exposé ci-dessus comporte une mémoire d'identifications d'étiquettes électroniques exclues et un moyen d'exclusion d'identifications d'étiquettes électroniques adapté à ne pas tenir compte d'identifications d'étiquettes conservées dans ladite mémoire.

Grâce à ces dispositions, on peut exclure l'identification de l'animal porteur du dispositif, par exemple, afin de ne mémoriser que des données utiles à l'identification des animaux femelles en chaleur.

Selon des caractéristiques particulières, le moyen de détection et le moyen d'identification sont adaptés à émettre un champ magnétique d'alimentation de l'étiquette électronique placée dans l'organisme de l'animal femelle pour alimenter ladite étiquette électronique.

Grâce à ces dispositions, les étiquettes électroniques portées par les animaux femelles n'ont pas besoin de comporter de source d'énergie. Elles sont donc moins coûteuses.

Selon des caractéristiques particulières, le moyen d'identification comporte un moyen d'écriture dans l'étiquette électronique placée dans l'organisme de l'animal femelle.

Grâce à ces dispositions, chaque femelle peut être repérée comme en chaleur par lecture de son étiquette électronique, soit par une base-station fixe, par exemple placée en salle de traite, à proximité d'un abreuvoir ou en tout autre endroit où les animaux passent régulièrement, soit par une base-station mobile.

Selon des caractéristiques particulières, le moyen de fixation comporte un harnais positionnant, au moment d'une tentative de chevauchement, une antenne du moyen d'identification d'une étiquette électronique placée dans l'organisme de l'animal femelle en position de recevoir des signaux émis par ladite étiquette électronique placée dans l'organisme de l'animal femelle.

Selon des caractéristiques particulières, le moyen de détection de tentative de chevauchement comporte un capteur de verticalité, un capteur de pression exercée sur le dos de l'animal femelle placé sous le ventre de l'animal qui porte le dispositif, un capteur de température placé sous le ventre de l'animal qui porte le dispositif et/ou un capteur de mouvements de l'animal qui porte le dispositif.

Grâce à chacune de ces dispositions, la détection de la tentative de chevauchement est aisée et fiable.

Selon des caractéristiques particulières, le dispositif tel que succinctement exposé ci-dessus comporte un moyen d'identification de l'animal femelle par traitement d'une image d'au moins une partie de l'animal femelle, ledit moyen d'identification étant déclenché par ledit moyen de détection.

Grâce à ces dispositions, il est inutile que les femelles portent une étiquette électronique, la reconnaissance biométrique des femelles étant effectuées par le dispositif porté par l'animal susceptible d'effectuer des tentatives de chevauchement.

Selon des caractéristiques particulières, le dispositif tel que succinctement exposé ci-dessus comporte un moyen de détermination d'un horodatage de chaque tentative de chevauchement.

Grâce à ces dispositions, que ce soit le dispositif ou les étiquettes électroniques des animaux femelles qui mémorisent les informations de tentative de chevauchement, l'éleveur peut déterminer les dates et heures de début de chaleur ainsi que le nombre de tentatives de chevauchement d'une femelle donnée.

Selon des caractéristiques particulières, le dispositif tel que succinctement exposé ci-dessus comporte un moyen de transmission d'au moins une partie des identifications des animaux femelles identifiées par le moyen d'identification.

Grâce à ces dispositions, la lecture des identifiants des femelles en chaleur est aisée et peut être effectuée à intervalle de temps régulier, par exemple une ou plusieurs fois par jour.

Selon des caractéristiques particulières, le dispositif tel que succinctement exposé ci-dessus comporte un moyen de traitement des identifications des animaux femelles adapté à déterminer au moins un résultat d'analyse statistique de tentatives de chevauchement de chaque animal femelle.

Par exemple, le moyen de traitement fournit l'heure optimale d'insémination d'au moins un animal ayant subi une ou plusieurs tentative(s) de chevauchement.

Selon des caractéristiques particulières, le moyen de traitement des identifications d'animaux femelles est adapté à déterminer ledit résultat en fonction d'une calibration de la libido d'au moins un animal de ladite fraction des animaux du troupeau.

Grâce à ces dispositions, la validité des traitements est améliorée.

Selon un deuxième aspect, la présente invention vise un dispositif de détection automatisé des chevauchements entre animaux, destiné à être placé dans l'organisme d'un animal femelle, caractérisé en ce qu'il comporte :
- un moyen de détection d'une tentative de chevauchement, dudit animal femelle, par un autre animal et
- un moyen de traitement de ladite tentative de chevauchement et
- un moyen de transmission du résultat du traitement.

Selon un troisième aspect, la présente invention vise un procédé de détection automatisée des chevauchements entre animaux, caractérisé en ce qu'il comporte :
- une étape d'installation, sur une fraction des animaux du troupeau, chaque animal de ladite fraction étant susceptible d'effectuer ladite tentative de chevauchement, d'un moyen de détection de tentative de chevauchement d'un animal femelle et d'un moyen d'identification dudit animal femelle et
- une étape de détection d'une tentative de chevauchement, par ledit animal, d'un animal femelle et
- en cas de détection d'une tentative de chevauchement, une étape d'identification d'une étiquette électronique placée dans l'organisme de l'animal femelle détecté ou d'identification de l'animal femelle par traitement d'une image du dit animal femelle.

Les avantages, buts et caractéristiques particulières de ce dispositif et de ce procédé étant similaires à ceux du dispositif visé par le premier aspect de la présente invention, ils ne sont pas rappelés ici.

D'autres avantages, buts et caractéristiques de la présente invention ressortiront de la description qui va suivre, faite dans un but explicatif et nullement limitatif en regard des dessins annexés dans lesquels :
- les figures 1A à 1D représentent, schématiquement, un premier mode de réalisation particulier du dispositif objet de la présente invention ;
- la figure 2 représente, schématiquement, un deuxième mode de réalisation particulier du dispositif objet de la présente invention ;
- la figure 3 représente, schématiquement, un troisième mode de réalisation particulier du dispositif objet de la présente invention ;
- la figure 4 représente une succession d'étapes mises en oeuvre dans un mode particulier de réalisation du procédé objet de la présente invention ;
- les figures 5 et 6 représentent, schématiquement, un quatrième mode de réalisation particulier du dispositif objet de la présente invention ;
- les figures 7 et 8 représentent, schématiquement, un cinquième mode de réalisation particulier du dispositif objet de la présente invention et
- la figure 9 représente une succession d'étapes mises en oeuvre dans un mode particulier de réalisation du procédé objet de la présente invention.

Avant de procéder à la description des modes de réalisation particuliers illustrés aux figures, on rappelle les faits suivants.

Suites aux crises sanitaires successives, et pour répondre à la demande de traçabilité des animaux, la communauté européenne a fortement encouragé l'identification unique et infalsifiable de tous les animaux. Il est apparu que l'identification électronique par transpondeur (connue sous le nom de technologie RFID pour Radio-Fréquence IDentification) répondait bien à ce besoin d'identifier tous les animaux.

Un transpondeur (ou "étiquette électronique") est un circuit électronique miniaturisé qui émet, lorsqu'il est stimulé par un champ magnétique, et éventuellement en réponse à des requêtes de lectures émises par une base-station, un signal identifiant qui est recueilli par l'antenne émettrice en modulant ledit champ magnétique. Différents supports de ces transpondeurs ont été développés pour s'adapter aux diverses caractéristiques des animaux et des produits consommés. La solution la plus simple en élevage consiste à intégrer un transpondeur aux marques en matières plastiques traditionnelles placées à l'oreille des animaux et lisibles par l'éleveur. Le second système, davantage utilisé pour les animaux de compagnie, consiste à injecter, sous la peau de l'animal, le transpondeur intégré dans une enveloppe en verre ou en matière plastique inerte. Un troisième système, spécifique aux ruminants, est désigné sous le terme "bolus". Le bolus est un cylindre en céramique (haute densité) de masse et de taille variables selon les espèces qui est placé par intubation dans les pré-estomacs du ruminant où ils y restent séquestrés. Enfin un quatrième système, utilisé chez les porcins, consiste à injecter un transpondeur dans la cavité péritonéale. A terme, tous les animaux d'élevage de la Communauté Européenne devront être identifiés par un des quatre types de support.

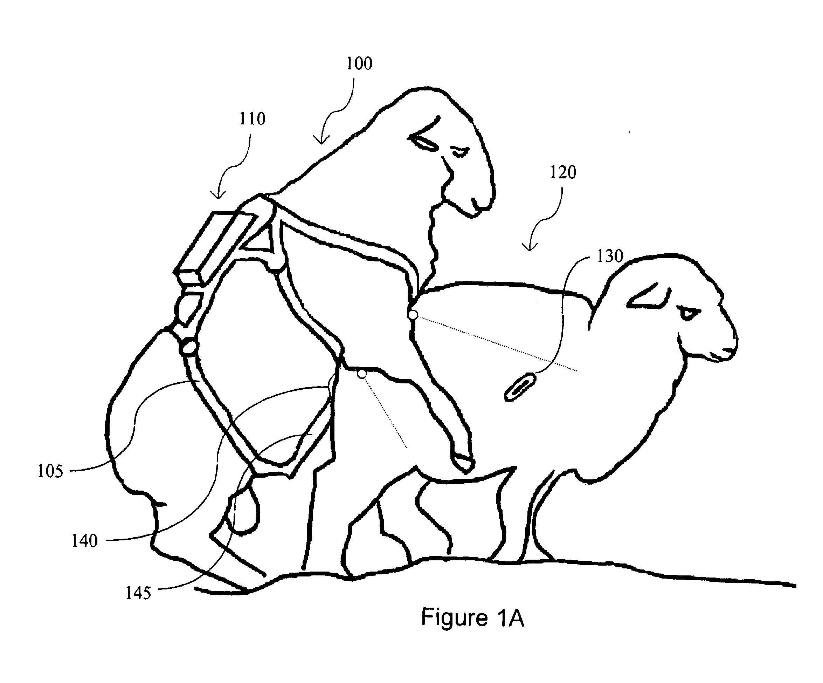

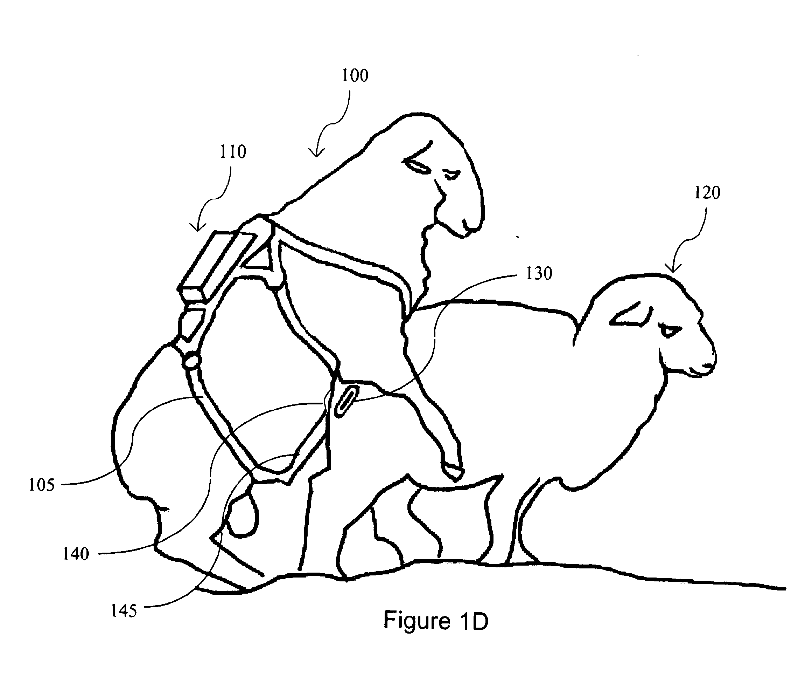

On observe, en figure 1A et 1D, un animal 100, porteur du dispositif 110 grâce à un moyen de fixation 105, chevauchant un animal femelle 120 portant un transpondeur ou étiquette électronique 130.

L'animal 100 est un mâle ou une femelle androgénisée. Il a donc tendance à chevaucher les femelles en chaleur. Le moyen de fixation 105 est ici un harnais maintenant en position sur l'animal 100 les différents éléments du dispositif 110. Le transpondeur 130 est un transpondeur passif ne comportant pas de source d'énergie, de type classique, par exemple conforme à la norme ISO IDEA. Il conserve un identifiant unique qui identifie l'animal porteur 120. En figure 1A, le transpondeur 130 est un bolus ruminal. En figure 1D, le transpondeur 130 est sous-cutané ou intrapéritonéal.

Le dispositif 110 comporte :
- un capteur de chevauchement 140,
- une antenne 145,
- des moyens de contrôle 150,
- une mémoire de programme 155,
- une mémoire vive 160,
- une alimentation électrique 165
- une horloge 170,
- une interface de communication 175 et
- un module de communication radio-fréquence 180.

Le capteur de chevauchement 140 est, par exemple, un capteur de pression placé sous le ventre de l'animal 100 ou un capteur de verticalité (par exemple un interrupteur à bille), un capteur de température sensible à la température générée par un congénère ou un capteur de mouvement (par exemple volumétrique) détectant la présence d'un autre animal.

Il émet un signal de détection de chevauchement lors des tentatives de chevauchement. L'interface de communication 175, ici une liaison série, permet de programmer les moyens de contrôle 150, ici un microcontrôleur. En variante, l'interface 175 est une liaison sans fil, par exemple radio ou infra rouge.

L'antenne 145 est adaptée à émettre un champ magnétique orienté vers le dessous de l'animal 100 qui porte le dispositif objet de la présente invention. Ainsi, dès que l'animal porteur se trouve au dessus d'une femelle, le dispositif entre en communication avec l'étiquette électronique portée par ladite femelle 120.

Par la programmation des moyens de contrôle 150, le dispositif 110 est adapté à lire les identifiants des transpondeurs se trouvant à portée de son antenne 145, lorsque le capteur de chevauchement 140 détecte une tentative de chevauchement, et à stocker ces identifiants dans la mémoire vive 160, avec une information de date et d'heure de la tentative de chevauchement. La date et l'heure sont fournies par l'horloge 170.

Pour éviter des lectures inutiles, par exemple lorsque l'animal 100 se couche, le signal de détection de chevauchement émis par le capteur de chevauchement peut n'être pris en considération que lorsqu'il dure plus d'une durée prédéterminée, par exemple cinq secondes. A cet effet, on peut utiliser une mémoire analogique placée en sortie du capteur de chevauchement 140.

Une base-station (non représentée), de type connu, est adaptée de lire la mémoire vive 160 lorsque le dispositif et la base-station se trouvent à proximité l'une de l'autre. La base-station peut être fixe ou mobile. La communication entre la base station et le dispositif est effectuée par l'intermédiaire de l'interface 175 qui peut être une liaison série ou radio ou infra rouge. Pour cette communication, les moyens de contrôle 150 effectuent les instructions transmises par la base-station.

Ainsi, selon le mode de scrutation de la mémoire du dispositif, qui peut être continu ou discontinu, les interventions de l'opérateur se limitent au transfert et/ou à l'effacement informatique des données contenues dans les dispositifs portés par les quelques animaux porteurs de ces dispositifs et l'identité des femelles qui ont été chevauchées est alors connue.

Le dispositif 110 intègre un module de traitement anticollision (non représenté) des identifiants contenus dans les étiquettes portées par l'animal chevauché et par l'animal qui chevauche lors du déclenchement de la lecture : seule l'identité de l'animal chevauché est stockée. Ce module évite la lecture de l'identifiant de l'animal porteur du dispositif 110 ou, s'il est lu, évite la mémorisation de cet identifiant avec les identifiants des animaux chevauchés.

Toutes les femelles du lot sont ensuite triées en lisant, avec la base-station, les identifiants conservés par leurs étiquettes électroniques et les femelles qui ont été chevauchées sont isolées pour être inséminées.

Ainsi, l'invention utilise le fait que toutes les femelles d'un troupeau puissent être identifiées par un transpondeur soit en implant sous-cutané, soit par un transpondeur intrapéritonéal, soit par un bolus ruminal. Le mâle (vasectomisé ou empêché de saillir) ou la femelle androgénisée, qui est mis en contact des femelles, va tenter de saillir celles qui sont en chaleur. Comme ce mâle est porteur d'un dispositif de lecture de transpondeur qui est déclenché par un capteur de chevauchement (par exemple capteur de verticalité ou de pression exercée sur la croupe de la femelle), il recueille et mémorise le numéro de la femelle ainsi que la date et l'heure de la tentative de saillie ou il écrit dans le transpondeur de la femelle son identifiant, la date et l'heure de la tentative de saillie.

Les informations d'identification des femelles en chaleur, stockées dans le dispositif, sont ensuite envoyées, à une borne radio réceptrice qui lit la mémoire vive de ce dispositif. Puis, un programme de traitement des données détermine quelles sont les femelles qui sont en chaleur, en fonction du nombre et de la fréquence des tentatives de chevauchement de chacune des femelles.

En variante (non représentée) le dispositif 110 comporte un moyen d'analyse des informations mémorisées qui fournit l'heure optimale d'insémination d'au moins un animal ayant subi une tentative de chevauchement.

Comme l'identification des femelles est facilitée par le transpondeur qu'elles portent, on peut alors faire passer tout le troupeau dans un portillon de contrôle disposant d'une base-station qui lit leurs identifiants et sépare les femelles à inséminer (naturellement ou artificiellement) des autres femelles.

Dans un mode particulier de réalisation, on a utilisé dans le dispositif, comme module de communication radio-fréquence 180, un kit de lecture Tiris RI-RFM-006A (Texas Instrument) vendu par un fabriquant de transpondeurs, qui sont conformes à la norme ISO identification animale, et qui sont soit implantés dans la région caudale des femelles, soit contenus dans un bolus ruminal.

Les fonctions de ce prototype assurent :
1) l'autorisation du déclenchement d'une séquence de la lecture (capteurs de pression et de verticalité) lorsque le mâle chevauche une femelle,
2) l'activation d'une antenne de lecture adaptée à la distance du transpondeur porté par la femelle,
3) l'ensemble des opérations de traitement des identifiants lus : déclenchement, lecture, enregistrement et stockage de l'identifiant de chaque femelle chevauchée, de la date et de l'heure de la tentative,
4) la fixation du dispositif sur le dos du mâle au moyen d'un harnais qui a été adapté pour positionner correctement l'antenne de lecture et les capteurs de chevauchement,
5) le transfert et/ou l'effacement de la mémoire vive par une base-station faisant interface avec un micro-ordinateur ou un terminal portable comportant un microcontrôleur programmé pour dresser une liste des femelles en chaleur identifiées par leur identification électronique.

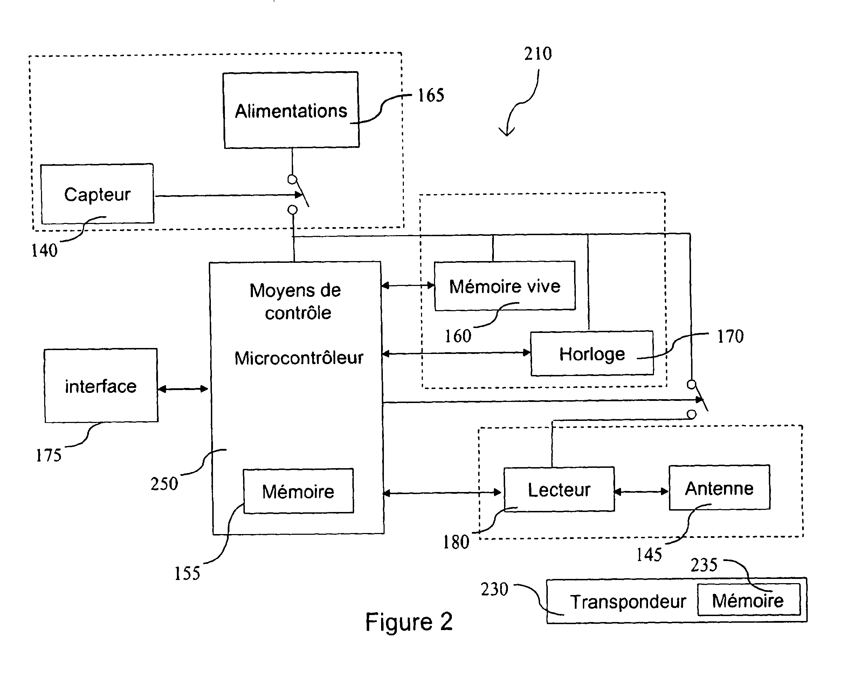

On observe, en figure 2, un deuxième mode de réalisation particulier du dispositif objet de la présente invention. Un animal 100, porteur du dispositif 210 grâce au moyen de fixation 105, chevauche un animal femelle 120 portant un transpondeur ou étiquette électronique 230.

Le transpondeur 230 est un transpondeur passif ne comportant pas de source d'énergie, de type classique, par exemple conforme à la norme ISO IDEA. Il possède une mémoire vive 235 dans laquelle le dispositif 210 peut écrire une information représentative d'au moins une tentative de chevauchement de l'animal 120 qui le porte. Il conserve un identifiant unique qui identifie l'animal porteur 120. Le dispositif 210 comporte :
- le capteur de chevauchement 140,
- l'antenne 145,
- des moyens de contrôle 250,
- la mémoire de programme 155,
- la mémoire vive 160,
- l'alimentation électrique 165
- l'horloge 170,
- l'interface de communication 175 et
- le module de communication radio-fréquence 180.

Par la programmation des moyens de contrôle 250, le dispositif 210 est adapté à écrire une information représentative de la tentative de chevauchement dans la mémoire vive 235 du transpondeur 230 se trouvant à portée de son antenne 145, lorsque le capteur de chevauchement 140 détecte une tentative de chevauchement. Préférentiellement, il écrit cette information avec une information de date et d'heure de la tentative de chevauchement.

Préférentiellement, à chaque tentative de chevauchement, cette information de tentative de chevauchement est mise à jour, soit en ajoutant une nouvelle information, soit en incrémentant un compteur de tentatives de chevauchement et en mémorisant les premières et dernières date et heure de ces tentatives. En variante, on inscrit aussi dans l'étiquette électronique porté par la femelle, l'identifiant du mâle. Cette variante permet d'effectuer un contrôle de paternité dans le cas où le mâle n'est pas empêché de saillir. En effet, compte tenu de la durée de gestation, lorsque deux saillies sont espacées de plus d'une semaine, on peut déterminer la paternité.

Une base-station (non représentée), de type connu, est adaptée de lire la mémoire vive 235 lorsque l'animal 120 et la base-station se trouvent à proximité l'une de l'autre et à réinitialiser la mémoire vive 235. La base-station peut être fixe ou mobile.

Ainsi, selon le mode de scrutation de la mémoire du dispositif, qui peut être continu ou discontinu, les interventions de l'opérateur se limitent au transfert informatique des données contenues dans les transpondeurs portés par les femelles et l'identité des femelles en chaleur est alors connue. Toutes les femelles du lot sont ainsi triées en lisant, avec la base-station, les informations conservées par leurs transpondeurs et les femelles qui sont en chaleur sont isolées pour être inséminées.

Dans le deuxième mode de réalisation du dispositif objet de la présente invention, chaque femelle en chaleur peut être identifiée par lecture de la mémoire vive 235 de son transpondeur 230, par exemple par un lecteur portable ou par un portillon de lecture comme celui utilisé pour lire les identifiants.

En variante le dispositif 210 comporte un moyen d'analyse des informations mémorisées (non représenté) qui fournit l'heure optimale d'insémination d'au moins un animal ayant subi une ou plusieurs tentative(s) de chevauchement.

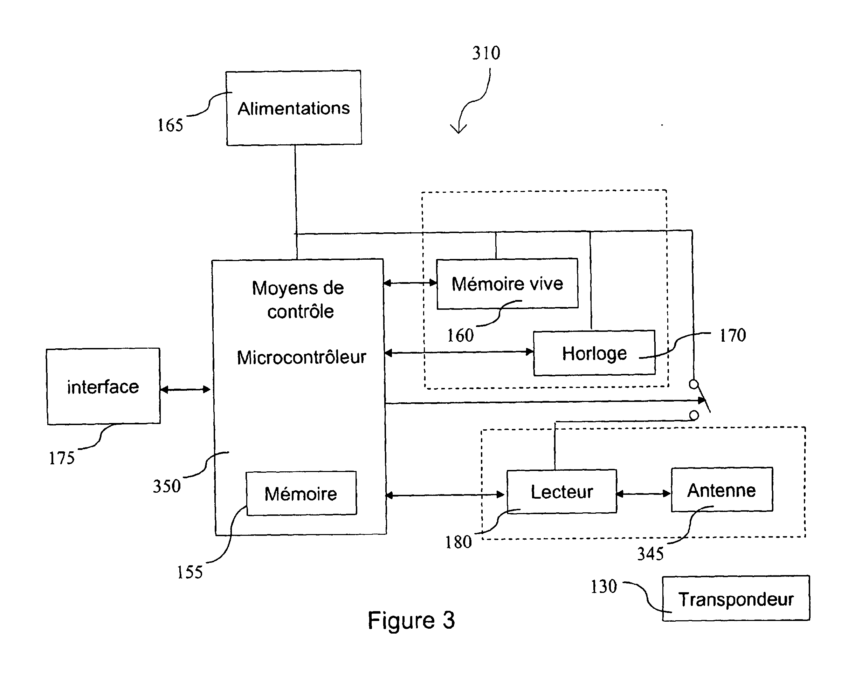

On observe, en figure 3, un animal 100, porteur du dispositif 310 grâce à un moyen de fixation 105, chevauchant un animal femelle 120 portant un transpondeur ou étiquette électronique 130.

Le transpondeur 130 est un transpondeur passif ne comportant pas de source d'énergie, de type classique, par exemple conforme à la norme ISO IDEA. Il conserve un identifiant unique qui identifie l'animal porteur 120. Le dispositif 310 comporte les mêmes éléments que le dispositif 110 (figures 1A à 1AC) à l'exception du capteur de chevauchement 140 qui est ici intégré dans l'antenne 345 et des moyens de contrôle 350 qui remplace les moyens de contrôle 150. L'antenne 345 est constituée et positionnée de telle manière qu'elle ne peut lire que des transpondeurs placés entre les pattes de l'animal qui porte le dispositif 310.

Par la programmation des moyens de contrôle 350, le dispositif 310 est adapté à lire, en permanence les identifiants des transpondeurs se trouvant à portée de son antenne 345, c'est-à-dire dans une position de chevauchement, et à stocker ces identifiants dans la mémoire vive 160, avec une information de date et d'heure de la tentative de chevauchement.

Pour éviter les signaux parasites, par exemple lorsque l'animal 100 se couche, la lecture de l'identifiant de la femelle est effectuées plusieurs fois pendant une durée prédéterminée, par exemple cinq secondes. Si, pendant cette durée, les lectures donnent le même identifiant, la détection de tentative de chevauchement est considérée comme validée.

Une base-station (non représentée), de type connu, est adaptée de lire la mémoire vive 160 lorsque le dispositif et la base-station se trouvent à proximité l'une de l'autre. La base-station peut être fixe ou mobile.

Ainsi, selon le mode de scrutation de la mémoire du dispositif, qui peut être continu ou discontinu, les interventions se limitent au transfert (lecture et effacement) informatique des données contenues dans les dispositifs portés par les quelques animaux porteurs de ces dispositifs et l'identité des femelles en chaleur est alors connue.

Toutes les femelles du lot sont ensuite triées en lisant, avec la base-station, les identifiants conservés par leurs étiquettes électroniques et les femelles qui sont en chaleur sont isolées pour être inséminées.

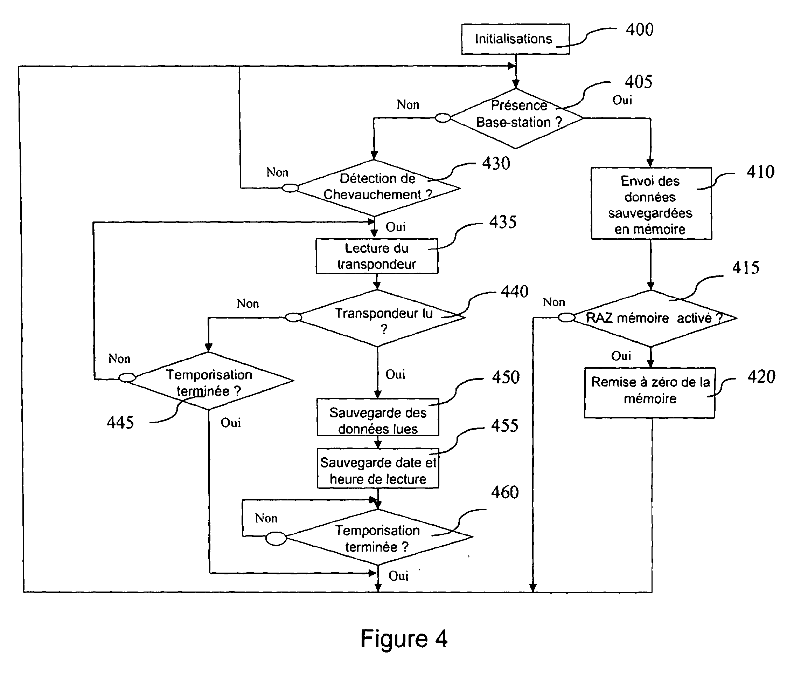

La figure 4 représente une succession d'étapes mises en oeuvre dans un mode particulier de réalisation du procédé objet de la présente invention adapté au dispositif illustré en figures 1A à 1C.

On observe, en figure 4, une étape 400 d'installation, sur une fraction des animaux du troupeau, chaque animal 100 de ladite fraction étant susceptible d'effectuer ladite tentative de chevauchement, d'un dispositif tel qu'illustré en regard des figures 1A à 3, 5 ou 6, comportant un moyen de détection de tentative de chevauchement d'un animal femelle et d'un moyen d'identification dudit animal femelle et d'initialisation de chaque dispositif installé.

Puis, au cours d'une étape 405, on détermine si une base-station a émis une requête de lecture de la mémoire vive du dispositif. Si oui, au cours d'une étape 410, on transmet les données conservées en mémoire vive du dispositif. Au cours d'une étape 415, on détermine si une remise à zéro de la mémoire vive a été activée. Si oui, au cours d'une étape 420, on efface le contenu d'identifiants de femelles conservés dans la mémoire vive du dispositif. Si non ou à la suite de l'étape 420, on retourne à l'étape 405.

Si le résultat de l'étape 405 est négatif, au cours d'une étape 430, on détermine si le capteur de tentative de chevauchement a détecté une tentative de chevauchement. Si non, on retourne à l'étape 405. Si oui, au cours d'une étape 435, on transmet une requête de lecture du transpondeur se trouvant dans la portée de l'antenne. Puis, au cours d'une étape 440, on détermine si un identifiant de transpondeur a été lu. Si non, au cours d'une étape 445, on détermine si une durée prédéterminée (par exemple cinq secondes) s'est écoulée depuis la fin de l'étape 430. Si non, on retourne à l'étape 435. Si oui, on retourne à l'étape 405.

Si le résultat de l'étape 440 est positif, au cours d'une étape 450, on mémorise, dans la mémoire vive du dispositif, l'identifiant lu et, au cours d'une étape 455, la date et l'heure de la tentative de chevauchement. En variante, au cours de l'étape 455, on effectue, en outre, une incrémentation d'un compteur de tentatives de chevauchement pour l'identifiant lu.

Puis, au cours d'une étape 460, on détermine si une durée prédéterminée (par exemple cinq minutes) s'est écoulée depuis la fin de l'étape 430. Cette durée prédéterminée sert à éviter de détecter plusieurs fois de suite la même tentative de chevauchement. Si non, on retourne à l'étape 460. Si oui, on retourne à l'étape 405.

En variante, adaptée au dispositif illustré en figure 2, à la place des étapes 450 et 455, on effectue une étape d'écriture d'une information représentative d'une tentative de chevauchement, de la date et de l'heure, dans le transpondeur porté par la femelle.

En variante, adaptée au dispositif illustré en figure 3, on élimine l'étape 430.

En variante, à la suite de l'étape 460 et avant de retourner à l'étape 405, on analyse les informations mémorisées pour fournir et mémoriser, pour l'animal ayant subi une tentative de chevauchement, l'heure optimale d'insémination.

En variante, à la suite de l'étape 460 et avant de retourner à l'étape 405, on détermine si l'identifiant lu n'est pas celui de l'animal porteur du dispositif (mâle ou femelle androgénisée) et, si oui, on efface cet identifiant de la mémoire des tentative de chevauchement.

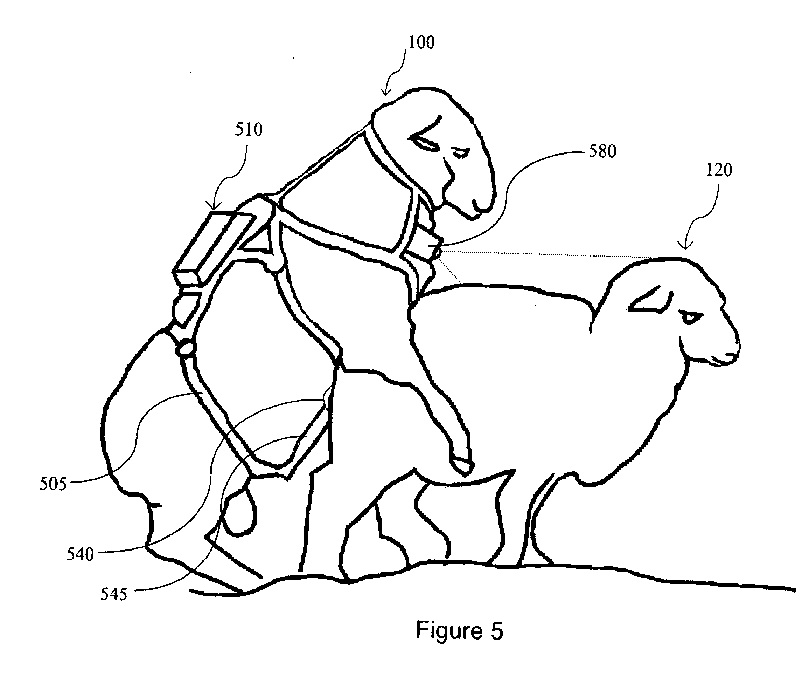

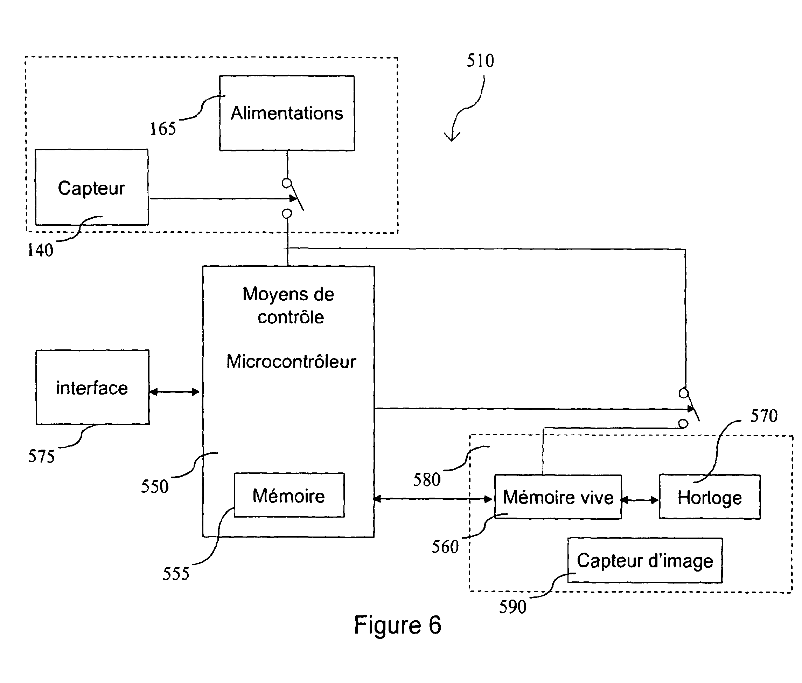

La présente invention ne se limite pas à l'u6lisation d'étiquettes de type RFID mais s'étend, bien au contraire, à tout système d'identification d'un animal, même sans support physique. En particulier, toutes les technologies de lecture et/ou d'écriture d'étiquettes électroniques sont conformes à l'esprit de la présente invention. De plus, la présente invention peut fonctionner avec une caméra ou un appareil photo numérique portés par le mâle ou la femelle androgénisée, qui prend au moins une image de la femelle sur laquelle a lieu la tentative de chevauchement, comme décrit en regard des figures 5 et 6.

On observe, en figure 5, un animal 100, porteur du dispositif 510 grâce à un moyen de fixation 505, chevauchant un animal femelle 120.

L'animal 100 est un mâle ou une femelle androgénisée. Il a donc tendance à chevaucher les femelles en chaleur. Le moyen de fixation 505 est ici un harnais maintenant en position sur l'animal 100 les différents éléments du dispositif 510. Le dispositif 510 comporte (voir figure 6) :
- le capteur de chevauchement 140,
- des moyens de contrôle 550,
- une mémoire de programme 555,
- une alimentation électrique 565
- un appareil photo 580 comportant un capteur d'images 590, une horloge 570 et un mémoire vive 560 et
- une interface de communication 575.

L'interface de communication 575, liaison série ou sans fil, permet de programmer les moyens de contrôle 550, ici un microcontrôleur et de lire la mémoire de l'appareil photo 580.

Par la programmation des moyens de contrôle 550, le dispositif 510 est adapté à provoquer la prise d'une photographie de l'animal 120, lorsque le capteur de chevauchement 140 détecte une tentative de chevauchement, et à stocker cette photographie dans la mémoire vive 560, avec une information de date et d'heure de la tentative de chevauchement. La date et l'heure sont fournies par l'horloge 570.

Pour éviter des lectures inutiles, par exemple lorsque l'animal 100 se couche, le signal de détection de chevauchement émis par le capteur de chevauchement peut n'être pris en considération que lorsqu'il dure plus d'une durée prédéterminée, par exemple cinq secondes. A cet effet, on peut utiliser une mémoire analogique placée en sortie du capteur de chevauchement 140.

Un ordinateur (non représenté), de type connu, est adapté de lire la mémoire vive 560 lorsque le dispositif 510 et l'ordinateur sont reliés par l'intermédiaire de l'interface de communication 575. L'ordinateur peut être fixe ou portable. L'ordinateur est adapté à imprimer les images des femelles chevauchées ou à effectuer une reconnaissance automatique de ces femelles grâce à des logiciels de traitement d'image de type connu, par exemple en biométrie.

Ainsi, les interventions de l'opérateur se limitent au transfert et/ou à l'effacement informatique des données contenues dans les dispositifs portés par les quelques animaux porteurs de ces dispositifs et les photographies des femelles qui ont été chevauchées permettent leur triage.

En variante (non représentée) le dispositif 510 comporte un moyen d'analyse d'images mémorisées qui fournit l'identité des femelles (par exemple par reconnaissance de caractéristiques biométriques ou de codes à barres ou autres marques distinctives (par exemple, numérotation peinte) et/ou l'heure optimale d'insémination d'au moins une femelle ayant subi une tentative de chevauchement.

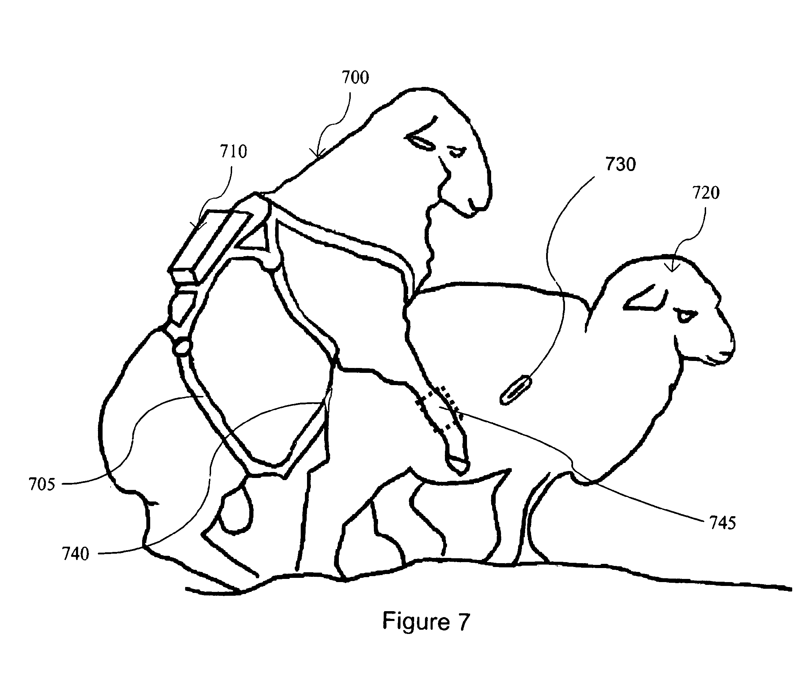

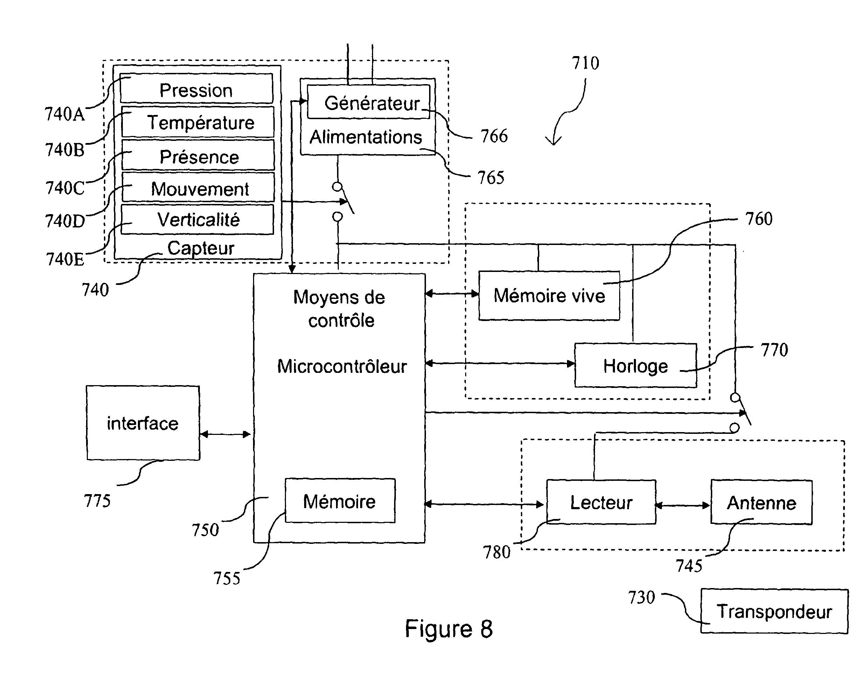

On observe, en figure 7, un animal 700, porteur du dispositif 710 grâce à un moyen de fixation 705, chevauchant un animal femelle 720 portant un transpondeur ou étiquette électronique 730. Le schéma d'un circuit électronique du dispositif 710 est donné en figure 8.

L'animal 700 est un mâle ou une femelle androgénisée. Il a donc tendance à chevaucher les femelles en chaleur. Le moyen de fixation 705 est ici un harnais maintenant en position sur l'animal 700 les différents éléments du dispositif 710. Dans le mode de réalisation décrit en figure 7, le moyen de fixation 705 est adapté à positionner une antenne 745 d'émission-réception de signaux électromagnétiques entre les pattes antérieurs de l'animal 700 ou sur l'une de ses pattes antérieures.

Ainsi, l'antenne 745 est adaptée à émettre un champ magnétique orienté vers le dessous de l'animal 700 qui porte le dispositif objet de la présente invention. Ainsi, dès que l'animal porteur se trouve au dessus d'une femelle 720, le dispositif entre en communication avec l'étiquette électronique portée par ladite femelle 720.

Le transpondeur 730 est un transpondeur passif ne comportant pas de source d'énergie, de type classique, par exemple conforme à la norme ISO IDEA. Il conserve un identifiant unique qui identifie l'animal porteur 720. En figure 7, le transpondeur 730 est une étiquette électronique mettant en oeuvre le standard RFID et placé dans une cavité interne ou un organe interne du corps de l'animal 720. Le transpondeur 730 est soit placé de manière permanente, par exemple, dans l'abdomen de l'animal 720, soit de manière temporaire, par exemple dans le vagin de l'animal 720. En variante, le transpondeur 730 est fixé à l'oreille de l'animal 720.

Le dispositif 710 comporte :
- un capteur de chevauchement 740,
- l'antenne 745,
- des moyens de contrôle 750,
- une mémoire de programme 755,
- une mémoire vive 760,
- une alimentation électrique 765,
- une horloge 770,
- une interface de communication 775 et
- un module de communication radio-fréquence 780.

Le capteur de chevauchement 740 comporte préférentiellement plusieurs capteurs :
- au moins un capteur de pression 740A placé sous le ventre de l'animal 700 qui détecte l'appui de l'animal 700 sur le corps de l'animal 720 ;
- au moins un capteur de température 740B qui détecte la température générée par l'animal 720 ;
- un capteur de présence 740C (par exemple un capteur volumétrique et/ou à détection de rayonnements infrarouges) détectant la présence de l'animal 720 sous le corps de l'animal 700 ;
- un capteur de mouvement 740D de l'animal 700 (par exemple accéléromètre à bille) détectant le saut de l'animal 700 sur le corps de l'animal 720 et/ou des mouvements caractéristiques du comportement de saillie et/ou
- un capteur de verticalité 740E (par exemple un interrupteur à bille) qui détecte la position oblique du corps de l'animal 700.

Le capteur de chevauchement 740 met en oeuvre des seuils de détection pour chacune des grandeurs physiques captées et, éventuellement, un traitement des valeurs mesurées, par exemple pour vérifier qu'au moins deux grandeurs physiques captées correspondent à une tentative de chevauchement et émet un signal de détection de chevauchement lors des tentatives de chevauchement. L'interface de communication 775, liaison série ou sans fil, permet de programmer les moyens de contrôle 750, ici un microcontrôleur.

Par la programmation des moyens de contrôle 750, le dispositif 710 est adapté à lire les identifiants des transpondeurs se trouvant à portée de son antenne 745, lorsque le capteur de chevauchement 740 détecte une tentative de chevauchement, et à stocker ces identifiants dans la mémoire vive 760, avec une information de date et d'heure de la tentative de chevauchement. La date et l'heure sont fournies par l'horloge 770.

Pour éviter des lectures inutiles, par exemple lorsque l'animal 700 se couche, le signal de détection de chevauchement émis par le capteur de chevauchement 740 peut n'être pris en considération que lorsqu'il dure plus d'une durée prédéterminée, par exemple cinq secondes. A cet effet, on peut utiliser une mémoire analogique placée en sortie du capteur de chevauchement 740 pour vérifier que la durée minimale de détection a été atteinte.

Le dispositif 710 intègre un module de traitement anticollision (non représenté) des identifiants contenus dans les étiquettes portées par l'animal chevauché 720 et par l'animal 710 qui chevauche, lors du déclenchement de la lecture : seule l'identité de l'animal chevauché 720 est stockée. Ce module évite la lecture de l'identifiant de l'animal porteur du dispositif 710 ou, s'il est lu, évite la mémorisation de cet identifiant avec les identifiants des animaux 720 chevauchés.

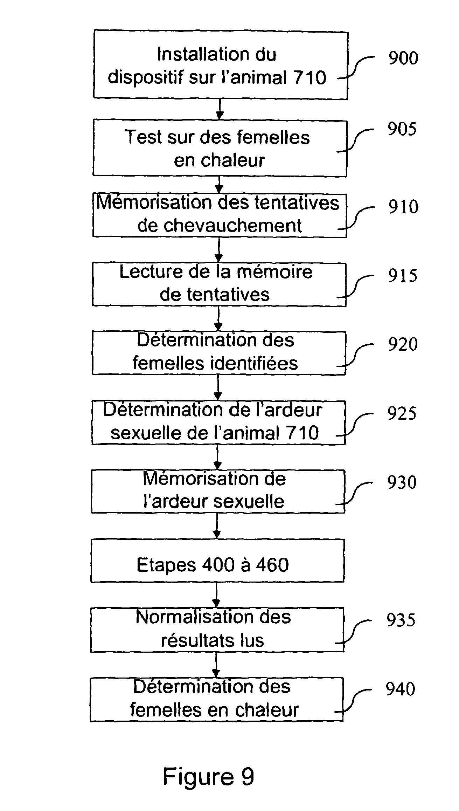

Les alimentations électriques 765 du dispositif 710 comportent deux électrodes placées au contact du corps de l'animal 700 et un générateur de tension 766, par exemple de 100 volts commandé par les moyens de contrôle 750. Lorsque les moyens de contrôle 750 détectent que l'animal 700 chevauche, dans un intervalle de temps prédéterminé, un nombre de fois prédéterminé le même animal femelle 720, on met les deux électrodes sous tension afin de déclencher un stimulus désagréable pour l'animal 700. On évite ainsi qu'un mâle ne s'attarde exagérément sur une seule femelle et on l'incite à rechercher une autre femelle en chaleur dans le troupeau. Ce stimulus est ainsi déclenché lorsque le nombre de chevauchements consécutifs ou dans un laps de temps assez court d'une même femelle dépasse une certaine valeur. Ce nombre de sauts est soit fixé, soit indexé sur la calibration décrite ci-dessous en regard de la figure 9.

En variante, les électrodes sont placées de telle manière que ce soit l'animal 720 qui reçoive le stimulus désagréable. On incite ainsi l'animal 720 à s'écarter de l'animal 700 pour que celui-ci recherche d'autres femelles en chaleur.

Dans les deux cas, préférentiellement, le déclenchement du moment de la décharge électrique ainsi que l'identifiant de l'animal 720 seront enregistrés dans la mémoire afin de pouvoir interpréter le nombre de tentatives de chevauchements mémorisées.

Une base-station (non représentée), de type connu, est adaptée de lire la mémoire vive 760 lorsque le dispositif 710 et la base-station se trouvent à proximité l'un de l'autre. La base-station peut être fixe ou mobile. L'antenne 745 sert pour cette communication avec la base-station et les moyens de contrôle 750 effectuent les instructions transmises par la base-station.

Ainsi, selon le mode de scrutation de la mémoire du dispositif 710, qui peut être continu ou discontinu, les interventions se limitent au transfert et/ou à l'effacement informatique des données contenues dans les dispositifs 710 portés par les quelques animaux 700 porteurs de ces dispositifs. Puis, un programme de traitement des données détermine quelles sont les femelles 720 qui sont en chaleur, en fonction du nombre et de la fréquence des tentatives de chevauchement de chacune des femelles.

Toutes les femelles du lot sont ensuite triées en lisant, avec la base-station, les identifiants conservés par leurs transpondeurs 730 et les femelles 720 qui ont été chevauchées sont isolées pour être inséminées (naturellement ou artificiellement). Eventuellement, on analyse les informations lues, par la base-station, en mémoire 760 pour fournir l'heure optimale d'insémination d'au moins un animal femelle 720 ayant subi une tentative de chevauchement de la part de l'animal 700.

Ainsi, l'invention utilise le fait que toutes les femelles d'un troupeau puissent être identifiées par un transpondeur 730. Le mâle (vasectomisé ou empêché de saillir) ou la femelle androgénisée 700, qui est mis en contact des femelles, va tenter de saillir celles de ces femelles qui sont en chaleur. Comme l'animal 700 est porteur d'un dispositif 710 de lecture de transpondeurs 730 qui est déclenché par le capteur de chevauchement 740, ce dispositif 710 recueille et mémorise l'identifiant unique de chaque femelle chevauchée 720 ainsi que la date et l'heure de la tentative de saillie.

En variante, le dispositif 710 porté par l'animal chevauchant 700 écrit, dans une mémoire du transpondeur 730 de la femelle chevauchée 720, son identifiant, la date et l'heure de la tentative de saillie.

En variante (non représentée) le dispositif 710 comporte un moyen d'analyse des informations mémorisées en mémoire 760 qui fournit l'heure optimale d'insémination d'au moins un animal femelle ayant subi une tentative de chevauchement de la part de l'animal 700.

Dans un mode particulier de réalisation, on a utilisé dans le dispositif 710, comme module de communication radio-fréquence 780, un kit de lecture Tiris RI-RFM-006A (Texas Instrument) vendu par un fabriquant de transpondeurs 730, qui sont conformes à la norme ISO identification animale.

Les fonctions de ce mode de réalisation assurent :
1) l'autorisation du déclenchement d'une séquence de la lecture (par le capteur de chevauchement 740) lorsque le mâle 700 chevauche une femelle 720,
2) l'activation de l'antenne de lecture 745 adaptée, en forme et en puissance d'émission et/ou sensibilité de réception, à la distance qui la sépare du transpondeur 730 porté par la femelle 720,
3) l'ensemble des opérations de traitement des identifiants des femelles 720 lus : déclenchement, lecture, enregistrement et stockage de l'identifiant de chaque femelle chevauchée 720 et de la date et de l'heure de la tentative de chevauchement,
4) la fixation du dispositif 710 sur le dos du mâle 700 au moyen d'un harnais qui a été adapté pour positionner correctement l'antenne de lecture 745 et chaque capteur de grandeur physique du capteur de chevauchement 740,
5) le transfert de contenu et/ou l'effacement de la mémoire vive 760 par une base-station faisant interface avec un micro-ordinateur ou un terminal portable comportant un microcontrôleur programmé pour dresser une liste des femelles en chaleur 720 identifiées par leur identification électronique.

On observe, en figure 9, une phase de calibration de l'animal 700 qui porte le dispositif 710. Au cours de cette étape 900, on installe le dispositif 710 sur l'animal 700, comme indiqué ci-dessus. Au cours d'une étape 905, on met l'animal 700 en présence, pendant une durée prédéterminée, par exemple 15 minutes, d'un petit nombre de femelles qui sont en chaleur de façon certaine. Dans ce test qui existe pour évaluer la libido des béliers, les brebis sont peut nombreuses et elles sont retirées au fur et à mesure que le bélier les a chevauchées. On a ainsi une idée de l'intensité de sa libido. On le met en présence de cinq en six brebis : si après 15 minutes face à des brebis en chaleur il n'a rien détecté il est inutilisable. Inversement, s'il les chevauche toute et très rapidement lui attribue un bon score.

Le dispositif 710 mémorise, comme indiqué ci-dessus, les tentatives de chevauchement de l'animal 700, étape 910. Puis, avec la station de base, on lit la mémoire 760 du dispositif 710, étape 915. Au cours d'une étape 920, on détermine quelles femelles ont subi les tentatives de chevauchement et à quelle fréquence.

Au cours d'une étape 925, en fonction de la connaissance initiale de l'identité des femelles qui sont effectivement en chaleur, on détermine la capacité de l'animal 700 à détecter les femelles en chaleur et l'ardeur sexuelle de cet animal 700.

Si l'animal 700 est suffisamment fiable, son ardeur sexuelle est mémorisés dans la mémoire 755 du dispositif 710 ou, préférentiellement, dans une base de données du système informatique qui traite ultérieurement les données lues dans la mémoire 760 du dispositif 710, étape 930.

Puis, les étapes 400 à 460 illustrées en figure 4 sont effectuées.

Au cours de l'analyse des données lues dans la mémoire 760, étape 935, on normalise les résultats obtenus avec l'animal 700 en fonction de son ardeur sexuelle mémorisées. En fonction des résultats normalisés, on détermine celles des femelles 720 qui sont en chaleur, étape 940, par détection des identifiants de femelles ayant subi un nombre de tentatives de chevauchement supérieur à une valeur prédéterminée.

Chacun des modes de réalisation illustrés ci-dessus peut incorporer des caractéristiques particulières d'autres modes de réalisation.

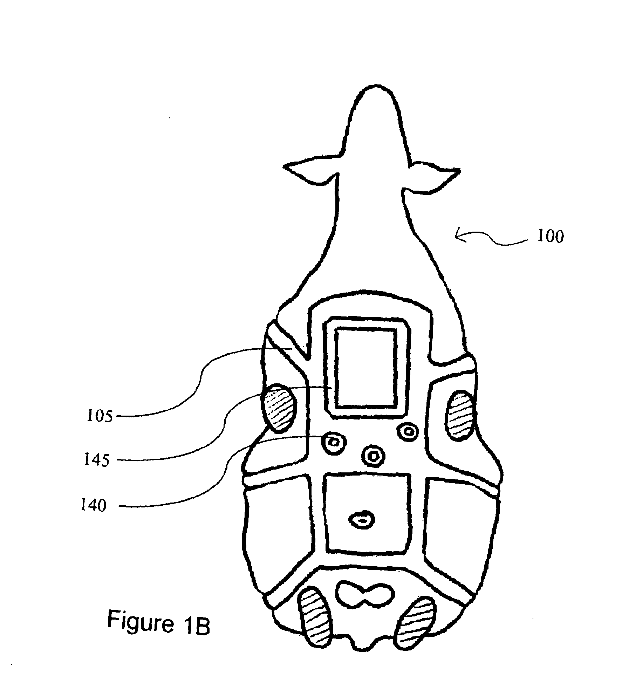

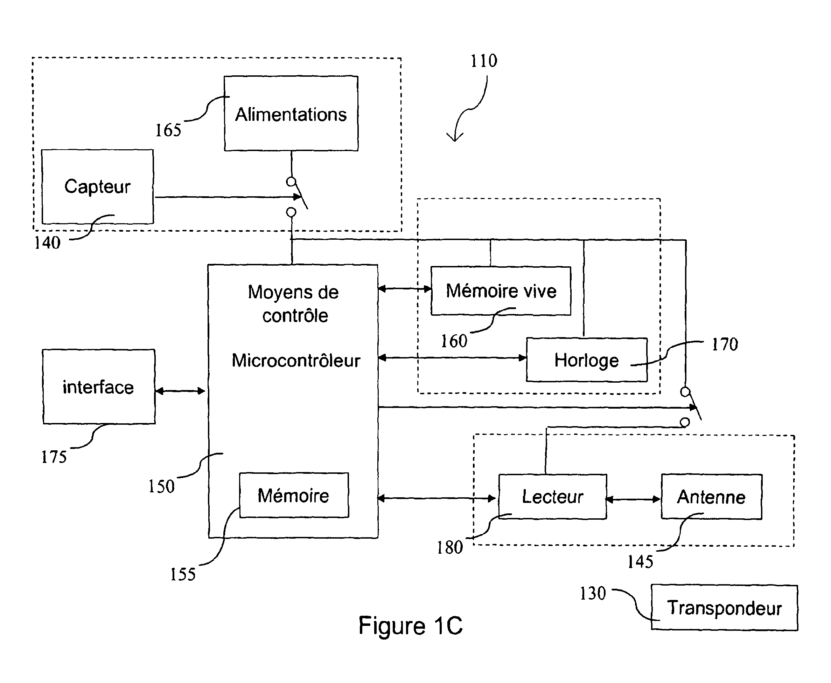

Conformément à chacun des aspects de la présente invention, un très faible nombre d'animaux sont porteurs de lecteurs mobiles : les animaux détecteurs (mâles, castrés ou entiers, ou femelles androgénisées). Dans les modes de réalisation illustrés aux figures 1 à 4, puisque toutes les femelles du troupeau sont équipées d'un transpondeur officiel permanent, elles sont potentiellement toutes détectables tout le temps. De plus, le procédé et le dispositif objets de la présente invention utilisent le comportement mâle-femelle qui est beaucoup plus sélectif que le comportement femelle-femelle. En effet, les vaches en chaleur acceptent le chevauchement, mais elles tentent également de chevaucher les autres vaches (non en chaleur).

En variante, la présente invention peut être utilisée pour la détection des comportements belliqueux entre mâles d'une même espèce (sélection des taureaux de combat, dans ce cas la boucle auriculaire porteuse d'un transpondeur serait concernée) ou pour l'identification d'animaux à distance : un chien équipé du dispositif et qui obéit à son maître se place à proximité d'un animal qui lui a été désigné, la proximité du chien et de l'animal cible déclenchant une lecture de l'identité de l'animal. Enfin, pour des recherches éthologiques sur des animaux domestiques ou sauvages qui auraient été au préalables identifiés, des études sur la proximité des animaux les uns par rapport aux autres pourraient être effectués selon des règles de déclenchement prédéfinies.

## Revendications

1. - Dispositif (110, 210, 310, 510) de détection automatisée des tentatives de chevauchement des femelles reproductrices d'un troupeau par des animaux détecteurs, ledit dispositif étant destiné à être porté par un animal détecteur (100) et **caractérisé en ce qu'**il est constitué :
- d'un moyen de fixation (105, 505) sur ledit animal,
- d'un moyen de détection (140) d'une tentative de chevauchement, par ledit animal, d'un animal femelle (120), et
- d'un moyen d'identification (145, 180, 345, 580) d'une étiquette électronique passive placée dans l'organisme de l'animal femelle déclenché par ledit moyen de détection.

2. - Dispositif selon la revendication 1, **caractérisé en ce que** ladite étiquette électronique passive est placée dans le système digestif de l'animal femelle.

3. - Dispositif selon l'une quelconque des revendications 1 ou 2, **caractérisé en ce qu'**il comporte une mémoire d'identifications d'étiquettes électroniques exclues et un moyen d'exclusion d'identifications d'étiquettes électroniques adapté à ne pas tenir compte d'identifications d'étiquettes conservées dans ladite mémoire.

4. - Dispositif selon l'une quelconque des revendications 1 à 3, **caractérisé en ce que** le moyen de détection (140) et le moyen d'identification (145, 180, 345, 580) sont adaptés à émettre un champ magnétique d'alimentation de l'étiquette électronique passive placée dans l'organisme de l'animal femelle pour alimenter ladite étiquette électronique passive.

5. - Dispositif selon l'une quelconque des revendications 1 à 4, **caractérisé en ce que** ledit moyen d'identification comporte un moyen d'écriture dans l'étiquette électronique passive placée dans l'organisme de l'animal femelle.

6. - Dispositif selon l'une quelconque des revendications 1 à 5, **caractérisé en ce que** ledit moyen de fixation comporte un harnais positionnant, au moment d'une tentative de chevauchement, une antenne du moyen d'identification (145, 180, 345, 580) en position de recevoir des signaux émis par ladite étiquette électronique passive placée dans l'organisme de l'animal femelle.

7. - Dispositif selon l'une quelconque des revendications 1 à 6, **caractérisé en ce que** le moyen de détection (140) d'une tentative de chevauchement comporte un capteur de verticalité (740E).

8. - Dispositif selon l'une quelconque des revendications 1 à 7, **caractérisé en ce que** le moyen de détection (140) de tentative de chevauchement comporte un capteur de pression (740A) exercée sur le dos de l'animal femelle, ledit capteur de pression étant placé sous le ventre de l'animal (100) qui porte le dispositif.

9. - Dispositif selon l'une quelconque des revendications 1 à 8, **caractérisé en ce que** le moyen de détection (140) de tentative de chevauchement comporte un capteur de température (740B), ledit capteur de température étant placé sous le ventre de l'animal (100) qui porte le dispositif.

10. - Dispositif selon l'une quelconque des revendications 1 à 9, **caractérisé en ce que** le moyen de détection (140) de tentative de chevauchement comporte un capteur de mouvements (740D) de l'animal (100) qui porte le dispositif.

11. - Dispositif selon l'une quelconque des revendications 1 à 10, **caractérisé en ce qu'**il comporte en outre un moyen d'identification de l'animal femelle par traitement d'une image d'au moins une partie de l'animal femelle, ledit moyen d'identification étant déclenché par ledit moyen de détection.

12. - Dispositif selon l'une quelconque des revendications 1 à 11, **caractérisé en ce qu'**il comporte un moyen d'horodatage (170, 570) de chaque tentative de chevauchement.

13. - Système pour la gestion des périodes de fertilité des animaux femelles d'un troupeau, par détection automatisée des chevauchements entre animaux, **caractérisé en ce qu'**il comprend :
a) une pluralité d'étiquettes électroniques passives placées dans l'organisme de chaque femelle reproductrice (120) du troupeau, et
b) une pluralité de dispositifs de détection des chevauchements portés par un petit nombre d'animaux détecteurs, chacun desdits dispositifs de détection comportant :
- un moyen de fixation (105, 505) sur ledit animal détecteur,
- un moyen de détection (140) d'une tentative de chevauchement, par ledit animal détecteur, d'une ou plusieurs femelles (120),
- un moyen d'identification (145, 180, 345, 580) de l'étiquette électronique passive placée dans l'organisme de la femelle acceptant ladite tentative de chevauchement, déclenché par ledit moyen de détection.

14. - Système selon la revendication 13, **caractérisé en ce qu'**il comporte un moyen de transmission (145, 150) d'au moins une partie des identifications des animaux femelles identifiées par le moyen d'identification.

15. - Système selon la revendication 14, **caractérisé en ce qu'**il comporte un moyen de traitement des identifications des animaux femelles adapté à déterminer au moins un résultat d'analyse des informations mémorisées relatives aux tentatives de chevauchement de chaque animal femelle.

16. - Système selon la revendication 15, **caractérisé en ce que** le moyen de traitement des identifications d'animaux femelles au cours du temps est adapté à déterminer ledit résultat en fonction d'une calibration de la libido d'au moins un animal de ladite fraction des animaux du troupeau.

17. - Procédé de détection automatisée des chevauchements entre animaux dans un troupeau, **caractérisé en ce qu'**il comporte :
- une étape d'installation dans l'organisme de chacune des femelles reproductrices du troupeau d'une étiquette électronique passive,
- une étape d'installation (400), sur une fraction des animaux du troupeau, chaque animal (100) de ladite fraction étant susceptible d'effectuer lesdites tentatives de chevauchement, d'un moyen de détection d'une tentative de chevauchement (140, 345) d'une desdites femelles, et d'un moyen d'identification (145, 180, 345, 580) de ces dernières.
- une étape de détection (430) d'une tentative de chevauchement, par ledit animal, de ladite femelle (120), et
- en cas de détection d'une tentative de chevauchement, une étape d'identification (435) de l'étiquette électronique passive placée dans l'organisme de la femelle acceptant ladite tentative.

18. - Procédé selon la revendication 17, **caractérisé en ce qu'**il comprend en outre une étape de mise en mémoire des données d'identification de chaque tentative de chevauchement, associées à un horodatage.

19. - Procédé selon l'une des revendications 17 ou 18, **caractérisé en ce qu'**il comprend en outre une étape de transmission des identifications des femelles identifiées et une étape de traitement desdites identifications pour fournir au moins un résultat d'analyse des informations mémorisées relatives aux tentatives de chevauchement de chacune desdites femelles.

20. - Procédé selon l'une quelconque des revendications 17 à 19, **caractérisé en ce qu'**il comporte une étape de calibration (905 à 930) de la libido d'au moins un animal (100) de ladite fraction des animaux du troupeau équipés dudit moyen de détection.

## Claims

1. - Device (110, 210, 310, 510) for the automated detection of attempts to mate female animals in a herd by detecting animals, said device being intended to be worn by a detecting animal (100) and **characterized in that** it is constituted of:
- a fastener (105, 505) on said animal,
- a means of detection (140) of a mounting attempt by said animal, on a female animal (120), and
- a means of identification (145, 180, 345, 580) of a passive electronic tag placed in the body of the female animal, activated by said means of detection.

2. - Device according to claim 1, **characterized in that** said passive electronic tag is placed in the digestive tract of the female animal.

3. - Device according to any of claims 1 or 2, **characterized in that** it includes a memory of identifications of excluded electronic tags and a means of exclusion of identifications of electronic tags capable of not taking into account identifications of tags stored in said memory.

4. - Device according to any of claims 1 to 3, **characterized in that** the means of detection (140) and the means of identification (145, 180, 345, 580) are capable of emitting a magnetic field energizing the passive electronic tag placed in the body of the female animal to energize said passive electronic tag.

5. - Device according to any of claims 1 to 4, **characterized in that** the means of identification includes a means for writing onto the passive electronic tag placed in the body of the female animal.

6. - Device according to any of the claims 1 to 5, **characterized in that** said fastener includes a harness positioning, at the moment of a mounting attempt, an antenna of the means of identification (145, 180, 345, 580) in place to receive signals emitted by said passive electronic tag placed in the body of the female animal.

7. - Device according to any of the claims 1 to 6, **characterized in that** the means of detection (140) of a mounting attempt includes a verticality sensor (740E).

8. - Device according to any of the claims 1 to 7, **characterized in that** the means of detection (140) of a mounting attempt includes a sensor for the pressure (740A) exerted on the back of the female animal, said pressure sensor being placed under the belly of the animal (100) wearing the device.

9. - Device according to any of the claims 1 to 8, **characterized in that** the means of detection (140) of a mounting attempt includes a temperature sensor (740B), said temperature sensor being placed under the belly of the animal (100) wearing the device.

10. - Device according to any of the claims 1 to 9, **characterized in that** the means of detection (140) of a mounting attempt includes a motion sensor (740D) of the animal (100) wearing the device.

11. - Device according to any of the claims 1 to 10, **characterized in that** it further includes a means of identification of the female animal by processing an image of at least one part of the female animal, said means of identification being activated by said means of detection.

12. - Device according to any of the claims 1 to 11, **characterized in that** it includes a means for determining the time and date (170, 570) of each mounting attempt.

13. - System for the management of heat periods of female animals of a herd, by means of automated detection of mounting of animals, **characterized in that** it includes :
a) a plurality of passive electronic tags placed in the body of each of the female animal (120) of the herd, and
b) a plurality of devices detecting the mountings worn by a small number of detecting animals, each of said detecting devices including :
- a fastener (105, 505) on said detecting animal,
- a means of detection (140) of a mounting attempt by said detecting animal, on one or several female animals (120),
- a means of identification (145, 180, 345, 580) of a passive electronic tag placed in the body of the female animal accepting said mounting attempt, activated by said means of detection.

14. - System according to claim 13, **characterized in that** it includes a means of transmission (145, 150) of at least one part of the identifications of the female animals identified by the means of identification.

15. - System according to claim 14, **characterized in that** it includes a means for processing the identifications of the female animals capable of determining at least one result of analysis of memorized information relating to the mounting attempts on each female animal.

16. - System according to claim 15, **characterized in that** the means for processing the identifications of female animals over time is capable of determining said result based on a calibration of the libido of at least one animal of said fraction of the animals in the herd.

17. - Process of automated detection of mountings among animals in a herd, **characterized in that** it includes:
- a step of installation in the body of each of the female animals of the herd, of a passive electronic tag,
- a step of installation (400), on a fraction of the animals of the herd, each animal (100) of said fraction being liable to make said mounting attempts, of a means for detecting mounting attempts (140, 345) on one of said female animals, and of a means for identifying (145, 180, 345, 580) said female animals,
- a step of detection (430) of a mounting attempt by said animal, on said female animal (120), and
- in the event of detection of a mounting attempt, a step of identification (435) of the passive electronic tag placed in the body of the female animal accepting said attempt.

18. - Process according to claim 17, **characterized in that** it further includes a step of memorizing the identification data of each mounting attempt,

19. - Process according to claim 17 or 18, **characterized in that** it further includes a step of transmission of identifications of the identified female animals and a step of processing said identifications capable of supplying at least one result of analysis of memorized information relating to the mounting attempts on each of said female animals.

20. - Process according to any of the claims 17 to 19, **characterized in that** it includes a step of calibration (905 to 930) of the libido of at least one animal (100) of said fraction of animals of the herd wearing said means of detection.

## Patentansprüche

1. - Vorrichtung (110, 210, 310, 510) für die automatische Erkennung der Deckversuche weiblicher Zuchttiere einer Herde durch Tiere mit Detektoren, wobei die besagte Vorrichtung dazu bestimmt ist, von einem Detektor-Tier (100) getragen zu werden und **dadurch gekennzeichnet ist, dass** sie besteht aus:
- einem Mittel zur Befestigung (105, 505) auf dem besagten Tier,
- einem Mittel zur Detektion (140) eines Deckversuchs eines weiblichen Tiers (120) durch das besagte Tier und
- einem Mittel zur Identifizierung (145, 180, 345, 580) eines passiven elektronischen Etiketts, das im Körper des weiblichen Tieres angebracht wird und das durch besagtes Detektionsmittel ausgelöst wird.

2. - Vorrichtung gemäß Anspruch 1, **dadurch gekennzeichnet, dass** das besagte passive elektronische Etikett im Verdauungstrakt des weiblichen Tieres platziert wird.

3. - Vorrichtung gemäß einem beliebigen der Ansprüche 1 oder 2, **dadurch gekennzeichnet, dass** sie einen Speicher für die Identifizierungen ausgeschlossener elektronischer Etiketten und ein Mittel zum Ausschluss von Identifizierungen elektronischer Etiketten beinhaltet, das so eingerichtet ist, Identifizierungen von Etiketten, die im besagten Speicher enthalten sind, nicht zu berücksichtigen.

4. - Vorrichtung gemäß einem beliebigen der Ansprüche 1 bis 3, **dadurch gekennzeichnet, dass** das Detektionsmittel (140) und das Identifizierungsmittel (145, 180, 345, 580) so eingerichtet sind, ein Magnetfeld zur Speisung des passiven elektronischen Etiketts im Körper des weiblichen Tieres auszusenden, um das besagte passive elektronische Etikett zu speisen.

5. - Vorrichtung gemäß einem beliebigen der Ansprüche 1 bis 4, **dadurch gekennzeichnet, dass** das besagte Identifizierungsmittel ein Mittel zum Beschreiben des passiven elektronischen Etiketts im Körper des weiblichen Tieres beinhaltet.

6. - Vorrichtung gemäß einem beliebigen der Ansprüche 1 bis 5, **dadurch gekennzeichnet, dass** das besagte Befestigungsmittel ein Geschirr beinhaltet, das zum Zeitpunkt des Deckversuchs eine Antenne des Identifizierungsmittels (145, 180, 345, 580) in eine Position bringt, in der sie Signale empfangen kann, die von dem besagten elektronischen Etikett im Körper des weiblichen Tiers ausgesendet werden.

7. - Vorrichtung gemäß einem beliebigen der Ansprüche 1 bis 6, **dadurch gekennzeichnet, dass** das Mittel zur Detektion (140) eines Deckversuchs einen Vertikalitätssensor (740E) beinhaltet.

8. - Vorrichtung gemäß einem beliebigen der Ansprüche 1 bis 7, **dadurch gekennzeichnet, dass** das Mittel zur Detektion (140) eines Deckversuchs einen Drucksensor (740A) beinhaltet, der den auf den Rücken des weiblichen Tieres ausgeübten Druck erfasst, wobei der besagte Drucksensor unter dem Bauch des Tieres (100), das mit der Vorrichtung versehen ist, angebracht ist.

9. - Vorrichtung gemäß einem beliebigen der Ansprüche 1 bis 8, **dadurch gekennzeichnet, dass** das Mittel zur Detektion (140) eines Deckversuchs einen Temperatursensor (740B) beinhaltet, wobei der besagte Temperatursensor unter dem Bauch des Tieres (100), das mit der Vorrichtung versehen ist, angebracht ist.

10. - Vorrichtung gemäß einem beliebigen der Ansprüche 1 bis 9, **dadurch gekennzeichnet, dass** das Mittel zur Detektion (140) eines Deckversuchs einen Bewegungssensor (740D) beinhaltet, der die Bewegungen des Tieres (100), das mit der Vorrichtung versehen ist, erfasst.

11. - Vorrichtung gemäß einem beliebigen der Ansprüche 1 bis 10, **dadurch gekennzeichnet, dass** sie ferner ein Mittel zur Identifizierung des weiblichen Tiers durch Verarbeitung eines Bildes von zumindest einem Teil des weiblichen Tiers beinhaltet, wobei das besagte Identifizierungsmittel durch das besagte Detektionsmittel ausgelöst wird.

12. - Vorrichtung gemäß einem beliebigen der Ansprüche 1 bis 11, **dadurch gekennzeichnet, dass** sie ein Mittel für die Datums- und Uhrzeitangabe (170, 570) jedes Deckversuchs beinhaltet.

13. - System für die Verwaltung der Fruchtbarkeitsperioden der weiblichen Tiere einer Herde durch automatische Erkennung der Deckversuche unter den Tieren, **dadurch gekennzeichnet, dass** es folgendes enthält:
a) eine unbestimmte Anzahl von passiven elektronischen Etiketten im Körper jedes weiblichen Zuchttiers (120) der Herde und
b) eine unbestimmte Anzahl von Vorrichtungen für die Detektion der Deckversuche, die von einer kleinen Anzahl Detektor-Tieren getragen werden, wobei jede der besagten Detektionsvorrichtungen folgendes beinhaltet:
- ein Mittel zur Befestigung (105, 505) auf dem besagten Detektor-Tier.
- ein Mittel zur Detektion (140) eines Deckversuchs durch das besagte Detektor-Tier eines oder mehrerer weiblicher Tiere (120),
- ein Mittel zur Identifizierung (145, 180, 345, 580) des passiven elektronischen Etiketts im Körper des weiblichen Tieres, das den besagten Deckversuch akzeptiert, wobei dieses Etikett durch das besagte Detektionsmittel ausgelöst wird.

14. - System gemäß Anspruch 13, **dadurch gekennzeichnet, dass** es ein Mittel zur Übertragung (145, 150) von mindestens einem Teil der Identifizierungen der durch das Identifizierungsmittel identifizierten weiblichen Tiere beinhaltet.

15. - System gemäß Anspruch 14, **dadurch gekennzeichnet, dass** es ein Mittel für die Verarbeitung der Identifizierungen der weiblichen Tiere beinhaltet, das so eingerichtet ist, dass es mindestens ein Analyseergebnis der gespeicherten Informationen im Zusammenhang mit den Deckversuchen jedes weiblichen Tieres ermittelt.

16. - System gemäß Anspruch 15, **dadurch gekennzeichnet, dass** das Mittel zur Verarbeitung der Identifizierungen der weiblichen Tiere im Laufe der Zeit so eingerichtet ist, dass es das besagte Ergebnis unter Berücksichtigung einer Kalibrierung der Libido von mindestens einem Tier des besagten Teils der Tiere der Herde ermittelt.

17. - Verfahren zur automatischen Erkennung der Deckversuche unter den Tieren in einer Herde, **dadurch gekennzeichnet, dass** es folgendes beinhaltet:
- eine Etappe für die Anbringung eines passiven elektronischen Etiketts im Körper jedes weiblichen Zuchttiers der Herde,
- eine Etappe für die Installation (400) an einem Teil der Tiere der Herde - wobei jedes Tier (400) des besagten Teils der Herde in der Lage ist, die besagten Deckversuche durchzuführen - eines Mittels zur Detektion eines Deckversuchs (140, 345) eines der besagten weiblichen Tiere und eines Mittels zur Identifizierung (145, 180, 345, 580) dieser weiblichen Tiere
- eine Etappe für die Detektion (430) eines Deckversuchs eines besagten weiblichen Tieres (120) durch das besagte Tier, und
- im Fall einer Detektion eines Deckversuchs eine Etappe für die Identifizierung (435) des passiven elektronischen Etiketts im Körper des weiblichen Tiers, das den besagten Deckversuch akzeptiert.

18. - Verfahren gemäß Anspruch 17, **dadurch gekennzeichnet, dass** es darüber hinaus eine Etappe für die Speicherung der Identifizierungsdaten jedes Deckversuchs kombiniert mit einer Datums- und Zeitangabe beinhaltet.

19. - Verfahren gemäß einem beliebigen der Ansprüche 18 oder 18, **dadurch gekennzeichnet, dass** es ferner eine Etappe für die Übertragung der Identifizierungen der identifizierten weiblichen Tiere und eine Etappe für die Verarbeitung der besagten Identifizierungen beinhaltet, um mindestens ein Analyseergebnis der gespeicherten Informationen im Zusammenhang mit den Deckversuchen jedes weiblichen Tieres zu liefern.

20. - Verfahren gemäß einem beliebigen der Ansprüche 17 bis 19, **dadurch gekennzeichnet, dass** es eine Etappe für die Kalibrierung (905 bis 930) der Libido mindestens eines Tieres (100) des besagten Teils der Tiere der Herde, die mit dem besagten Detektionsmittel ausgestattet sind, beinhaltet.
